# EUROPÄISCHE PATENTSCHRIFT

(11) **EP 1 901 856 B1**
(45) Veröffentlichungstag und Bekanntmachung des Hinweises auf die Patenterteilung: **15.12.2010**
(21) Anmeldenummer: 07765209.7
(22) Anmeldetag: 17.07.2007
(51) Int. Cl.: B05D 7/00, B05D 7/14

(54) **KORROSIONSSCHUTZSCHICHT MIT VERBESSERTEN EIGENSCHAFTEN**
CORROSION PROTECTIVE LAYER WITH IMPROVED CHARACTERISTICS
COUCHE DE PROTECTION CONTRE LA CORROSION PRÉSENTANT DES PROPRIÉTÉS AMÉLIORÉES

(30) Priorität: 31.07.2006 DE 102006035660
(43) Veröffentlichungstag der Anmeldung: 26.03.2008
(73) Patentinhaber: Voestalpine Stahl GmbH, 4020 Linz (AT)
(72) Erfinder: TOMANDL, Alexander, 3354 Wolfsbach, Bez Amstetten (AT); GERDENITSCH, Johann, 4040 Linz (AT)
(74) Vertreter: Naefe, Jan Robert
(86) Internationale Anmeldenummer: PCT/EP2007/006336
(87) Internationale Veröffentlichungsnummer: WO 2008/014885

(56) Entgegenhaltungen:
- EP-A- 0 566 121
- EP-A- 0 787 830
- WO-A-01/15894
- WO-A-94/01602
- JP-A- 2000 248 377

## Beschreibung

Die Erfindung betrifft eine Korrosionsschutzschicht mit verbesserten Eigenschaften.

Aus der EP 0 566 121 B1 ist ein Verfahren zur Herstellung von mit einer Zink-Chrom-Legierung galvanisierten Stahlblechen mit hervorragender Haftfestigkeit bekannt. Bei diesem Verfahren wird die Oberfläche des Stahlblechs unter Verwendung eines sauren Galvanisierungsbades, das Zinkionen und Chromionen in einem bestimmten molaren Konzentrationsverhältnis enthält, galvanisiert, wobei mindestens ein nichtionischer organischer Zusatz mit mindestens einer Dreifachbindung enthalten ist.

Aus "Journal of Applied Electrochemistry", 30, Seiten 870 bis 822 "Role of polyethylene glycol in electrodeposition of zinc-chromium alloys" ist Polyethyleneglykol (PEG) als Zusatz bei der elektrolytischen Abscheidung von Zink-Chrom-Legierungen bekannt.

Aus "Corrosion resistance of ZN-CR Alloy electrocoated Steel Sheets" von Kanamura, T., Suzuki, S. und Arai, K. ist es bekannt, insbesondere für Automobilbleche den Korrosionsschutz durch verschiedene Arten von zinkbasierten Beschichtungen zu verbessern, wobei hier angeführt wird, dass eine Erhöhung der Schichtdicke zwar den Korrosionswiderstand erhöht, zur gleichen Zeit aber die Umformbarkeit und Schweißbarkeit verschlechtert. Eine Lösung dieses Problems sollte darin liegen, ein nur leicht beschichtetes Stahlband zu schaffen, mit einem guten Korrosionswiderstand. Hierfür wurden Zink-Chrom-Legierungen untersucht, mit 5-20 % Chromanteil in der Beschichtung, wobei geschlussfolgert wurde, dass Zink-Chrom ein Material ist, welches ausgezeichneten Korrosionswiderstand besitzt, selbst bei einer dünneren Beschichtung, wobei eine Beschichtung von 20 g/m² bereits sehr gut sein soll. Zudem sollen Zink-Chrom-Beschichtungen einen ausreichenden kathodischen Schutz leisten und effektiv bei der Verhinderung von Kantenkorrosion sein. Zusätzlich wird die ungenügende Phosphatierbarkeit von ZnCr-Schichten beschrieben.

Aus der EP-A-573015 ist ein organisches beschichtetes Stahlverbundblech bekannt, bestehend aus einer ein- oder zweiseitig mit einer Zink oder Zinklegierung beschichteten Oberfläche, die mit einem Chromatfilm versehen ist und einer darauf befindlichen organischen Beschichtung mit einer Schichtstärke von 0,1 bis 5 µm. Die organische Beschichtung ist aus einer Primär-Zusammensetzung gebildet, die aus einem organischen Lösungsmittel, einem Epoxydharz mit einem Molekulargewicht zwischen 500 und 10.000, einem aromatischen Polyamid und einer Phenol- oder Kresolverbindung als Beschleuniger besteht. Die organische Beschichtung wird in einer Trockenfilmschichtstärke von 0,6 bis 1,6 µm aufgebracht, da dünnere Schichten als 0,1 µm zu dünn sind, um Korrosionsschutz zu bewirken. Die organische Beschichtung besitzt bei dieser Gesamtbeschichtung somit einen wesentlichen Korrosionsschutzanteil. Bei Schichtstärken über 5 µm soll die Schweißbarkeit beeinflusst werden.

Die DE-A-3640662 betrifft ein oberflächenbehandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung soll aus einem basischen Harz bestehen, das durch Umsetzung eines Epoxydharzes mit Aminen hergestellt wurde, sowie einer Polyisocyanatverbindung. Auch dieser bekannte Film darf nur in Trockenfilmstärken von kleiner als etwa 3,5 µm aufgebracht werden, weil bei höheren Schichtenstärken die Schweißeignung stark herabgesetzt ist.

Aus der DE-C-3412234 ist ein gleitfähiger und schweißbarer Korrosionsschutzprimer für elektrolytisch dünnverzinktes, phosphatiertes oder chromatiertes und verformtes Stahlblech bekannt, wobei dieser Korrosionsschutzprimer aus einer Mischung von über 60 % Zink, Aluminium, Grafit und/oder Molibdänsulfit sowie ein weiteres Korrosionsschutzpigment 33 bis 35 % eines organischen Bindemittels sowie etwa 2 % eines Dispergierhilfsmittels oder Katalysators besteht. Als organisches Bindemittel werden Polyesterharze und/oder Epoxydharze sowie deren Derivate vorgeschlagen. Ein solcher Korrosionsschutzprimer wird unter dem Namen "Bonazinc 2000" von der Firma BASF am Markt vertrieben. Eine derartige Beschichtung ist jedoch nicht ausreichend punktschweißbar und die Einbrenntemperatur liegt zu hoch, so dass viele moderne Stähle hierfür nicht mehr eingesetzt werden können. Zudem ist die Lackhaftung nicht immer ausreichend.

Aus der EP 1 030 894 B1 ist eine leitfähige und schweißbare Korrosionsschutzzusammensetzung zur Beschichtung von Metalloberflächen sowie ein Verfahren zur Beschichtung von Metalloberflächen mit elektrisch leitfähigen organischen Beschichtungen bekannt. Dieser Druckschrift liegt die Aufgabe zugrunde, eine Beschichtungszusammensetzung bereitzustellen, die den Anforderungen der Automobilindustrie genügt, wobei die Zusammensetzung für das Coil-Coating-Verfahren geeignet sein soll, eine niedrige Einbrenntemperatur und eine deutlichere Reduzierung des Weißrostes auf verzinktem Stahlblech erzielbar sein soll, wobei die Haftung der organischen Beschichtung auf den metallischen Substrat verbessert wird und auch ein ausreichender Korrosionsschutz bei niedriger Chromauflage im Falle einer Chromatierung und vorzugsweise bei chromfreien Vorbehandlungsverfahren vorhanden sein soll. Zudem soll eine Punktschweißeignung vorhanden sein und die Verwendung weiterer Korrosionsschutzprodukte, wie Hohlraumversieglung überflüssig sein. Die Beschichtung soll hierfür 10 bis 40 Gew.-% eines organischen Bindemittels, 0 bis 15 Gew.-% eines Korrosionsschutzpigments auf Silikatbasis, 40 bis 70 Gew.-% pulverförmiges Zink, Aluminium, Grafit und/oder Molibdänsulfit sowie 0 bis 30 Gew.-% t eines Lösungsmittels enthalten, wobei das organische Bindemittel mindestens ein Epoxydharz ist, mindestens einen Härter ausgewählt aus Guanidin, substituierten Guanidinen, substituierten Harnstoffen, zyklischen Tertiäraminen und deren Mischungen sowie mindestens ein blockiertes Polyurethanharz enthalten soll.

Aus der DE 102 56 286 A1 ist ein Korrosionsschutzprimer bekannt, der für die verschleißarme Umformung von z. B. Stahlblechen, wie sie in der Automobilindustrie verarbeitet werden, in der Serienfertigung geeignet sein soll. Diese Beschichtung soll trotz der ein- oder sogar beidseitigen Beschichtung mit Zink oder einer zinkhaltigen Legierung, mit einer dünnen Vorbehandlungsschicht, die einen Korrosionsschutz sowie einen Haftgrund für den nachfolgenden Primer darstellt, und mit einer 0,5 bis 10 µm dicken Schweißprimerbeschichtung ausreichend elektrisch leitfähig sein, um gut schweißbar zu sein. Bei den hier angesprochenen Zink oder zinkhaltigen Legierungen dürfte es sich um die in der Automobilherstellung üblichen Legierungen handeln: elektrolytische Zinkschicht, feuerverzinkte Schicht (0,2 % Aluminiumanteil), Galfan (5 % Aluminiumanteil), Galvanealed und Galvalume (etwa hälftige Anteile von Zink und Aluminium). Diese Aufgabe soll mit einem lackartigen, Harz und anorganische Partikel enthaltenden Gemisch zum Aufbringen eines polymeren, korrosionsbeständigen, verschleißarm umformbaren, elektrisch leitfähigen und elektrisch schweißbaren Überzug gelöst werden.

Aus der EP 0 607 452 A1 ist eine Zink-Chrom-Beschichtung für Automobilbleche bekannt, wobei ausgeführt wird, dass Zink-Chrom-Schichten gegenüber herkömmlichen zinkbasierten Legierungsschichten auf Stählen den Vorteil haben, dass im Ursprungszustand der Widerstand gegen Korrosion höher ist als der der anderen Schichten. Allerdings wird ausgeführt, dass zwar Zink-Chrom-legierte Schichten eine verbesserte Korrosionsbeständigkeit haben, dies jedoch nur für das reine Blechmaterial zutrifft und (auf Grund von Umformungsvorgängen) der Widerstand gegen Korrosion an der äußeren Oberfläche einer Automobilkarosserie schwach ist. Dies hängt mit der mangelnden Umformbarkeit der Zink-Chrom-Schichten zusammen. Darüber hinaus wird ausgeführt, dass jede Beschichtung einen verbesserten Korrosionswiderstand besitzt, wenn das Beschichtungsgewicht steigt, wobei gerade beim Fall einer Zink-Chrom-Beschichtung das Gegenteil der Fall ist, da die Umformbarkeit in Erwiderung auf eine Erhöhung der Schichtdicke bzw. des Beschichtungsgewichts absackt. Zudem wird ausgeführt, dass Zink-Chrom-Schichten besonders empfindlich gegen Abplatzer sind. Weiter wird ausgeführt, dass der Korrosionswiderstand bei einer Zink-Chrom-Schicht mit dem Chromgehalt steigt, was jedoch nachteilig ist, da die Beschichtungshaftung am Grundmetall mit steigendem Chromgehalt sinkt. Die vorgenannten Probleme sollen dadurch gelöst werden, dass ein spezieller Phasenaufbau bei Zink-Chrom-Schichten gewählt wird, wobei eine Struktur erreicht wird, die hexagonal ist und wobei die Gitterkonstanten eine bestimmte Größe haben.

Es konnte jedoch festgestellt werden, dass auch bei einem Einhalten derartiger Gitterkonstanten derartige Zink-Chrom-Schichten über die üblichen Nachteile verfügen, die einen Einsatz in der Automobilindustrie nicht möglich erscheinen lassen.

Aus der EP 0 777 763 ist eine Zusammensetzung zum Behandeln von Metallen und ein Verfahren zum Aufbringen der Behandlung bekannt. In dieser Druckschrift wird eine Zwischenbeschichtung zur Erzielung einer besseren Lackierbarkeit vorgeschlagen, wobei die sonst üblichen Chromatierungen für Automobilbleche vermieden werden sollen.

Eine derartige Chromatierung ist aus der EP 0 630 993 A1 als Vorbehandlung vor der Lackierung bekannt, wobei derartige Chromatierungen auch heute noch üblich sind und sich alternative Methoden, wie aus der EP 0 777 763 nicht durchgesetzt haben.

Aus der EP 0 285 931 A1 ist ein beschichtetes Stahlblech bekannt, auf das eine Zink-Chrom-Beschichtung abgeschieden ist. Hier wird ausgeführt, dass vor einer Lackierung die primäre Zink-Chrom-Beschichtung vorzugsweise mit einer zusätzlichen Zink- bzw. Zink-Eisen-Schicht überdeckt wird, vorzugsweise mit einer Beschichtung, die mehr als 60 Gew.-% Eisen enthält, um die Bindungseigenschaften mit einer herkömmlichen Phosphatierungsbeschichtung zu verbessern. Insofern ist auch hier ausgeführt, dass sich Zink-Chrom-Beschichtungen praktisch nicht phosphatieren lassen.

Aus der japanischen Offenlegungsschrift HEI 9-276789 ist eine Stahlplatte mit organisch zusammengesetzter Plattierung bekannt, wobei hierbei ein Stahlsubstrat mit einer Zink-NickelLegierung, einer Zink-Eisen-Legierung oder einer Zink-Chrom-Legierung ausgeführt ist, wobei auf diese Legierung eine Chromatbehandlung durchgeführt wird und eine organische Beschichtung vorhanden ist, wobei jedoch in der organischen Beschichtung Stronziumchromat, Kalziumchromat, Zinkchromat, Bariumchromat oder Amoniumchromat sowie Amoniumbichromat enthalten sein sollen.

Aus der japanischen Offenlegungsschrift HEI 9-277438 ist ebenfalls eine schweißbare Stahlplatte mit organisch zusammengesetzter Plattierung bekannt, wobei zur Verbesserung der Korrosion der Beschichtung sowie der Haftfähigkeit zwischen der Stahlplatte sowie einer Lackschicht auf beiden Seiten der beschichteten Stahlplatte eine chemische Behandlung vorgenommen wird, die eine Phosphorsäureverbindung als Hauptkomponente hat. Insbesondere soll die Phosphorsäurebehandlung auf der plattierten, d. h. mit Zink-Eisen, Zink-Nickel oder Zink-Chrom beschichteten Stahlplatte durchgeführt werden, wobei auf der Oberfläche Kristalle der Phosphorsäureverbindung abgelagert werden.

Aus der JP 07292480 ist es bekannt, eine beschichtete Stahlplatte mit einem wasserlöslichen Polymer zu beschichten, um eine nachfolgende Phosphatierung zu ermöglichen.

Im Prinzip haben sich verzinkte Stahlbleche bewährt, die vor dem Lackieren mit einem Korrosionsschutzprimer versehen werden und anschließend phosphatiert und/oder chromatiert werden. Bei diesen Schichten ist jedoch von Nachteil, dass wegen der zusätzlichen organischen Schicht in Form des Korrosionsschutzprimers die Schweißeignung leidet. Der Korrosionsschutzprimer ist bei Zink-Schichten notwendig, um insgesamt im Flanschbereich einen ausreichenden Korrosionsschutz sicherzustellen.

Es wurde zudem die Verwendung von Zink-Chrom-Beschichtungen auf Stahlblechen versucht, wobei als positive Eigenschaft eine relativ hohe Korrosionsbeständigkeit in unbeschichtetem Zustand vorhanden ist und die kathodische Schutzwirkung ähnlich der zu Zink ist. Die Korrosionsbeständigkeit ist so hoch, dass selbst im unlackierten Flanschbereich auf zusätzliche Korrosionsschutzprimer verzichtet werden kann.

Zudem muss bei Zink-Chrom-Schichten zwingend eine Chromatierung der Schicht oder zumindest eine andere Vorbehandlung durchgeführt werden. Die Chromatierung ist jedoch wegen der Anwesenheit hochgiftiger Chrom-VI-Ionen sehr problematisch. Andere Vorbehandlungen stellen einen aufwändigen Zwischenschritt dar, wie z. B. aus der EP 0 285 931 A1 oder der EP 0 777 763 bekannt.

Zink-Chrom-Schichten haben sich jedoch bei der Beschichtung von Blechen, insbesondere für die Automobilindustrie, nicht durchsetzen können, da sie keine Phosphatierbarkeit besitzen. Dies wird dadurch verursacht, dass sich auf Zink-Chrom-Schichten beim Phosphatieren inhomogene Phosphatschichten ausbilden. Man findet auf der Oberfläche Bereiche mit hohen Phosphat-Auflagen und nicht phosphatierte Bereiche.

Diese ungleichmäßige Belegung verschlechtert die Lackhaftung im Vergleich zu Reinzink aber sogar auch im Vergleich zu Zink-Chrom-Schichten, die nicht der Phosphatierung ausgesetzt wurden. Das Weglassen der Phosphatierbehandlung verbessert zwar die Lackhaftung auf Zink-Chrom-Schichten. Für einen Einsatz im Automobilbereich muss jedoch gewährleistet werden, dass die Oberfläche ohne negative Auswirkung durch ein Phosphatierbad laufen kann, da dieser Prozess zwangsläufig immer an der gesamten Karosse durchgeführt wird.

Ein wesentlicher Nachteil ist zudem der hohe Abrieb bei der Umformung der Bleche, welcher mit dem Chromgehalt und der Dicke der Zink-Chrom-Beschichtung steigt. Der Abrieb bei der Umformung ist hierbei teilweise so hoch, dass in besonders stark umgeformten Bereichen der Abrieb bis auf das Grundmaterial geht, so dass die positiven korrosionsschützenden Eigenschaften nicht mehr vorhanden sind.

Allerdings wäre positiv, dass Zink-Chrom-Schichten keinen Korrosionsschutzprimer benötigen, da ein ausreichender Korrosionsschutz auch im Flansch- und Bördelbereich - im Gegensatz zu Zink - immer gewährleistet ist.

Auf Zinkschichten wird, wie bereits ausgeführt, vor der Phosphatierung noch ein Korrosionsschutzprimer(KSP) aufgebracht, der der Verbesserung des Korrosionsschutzes in Bereichen dient, in die der Lack bei der nachfolgenden Lackierung nicht eindringt, insbesondere die Flanschbereiche, Bördelungen usw. Ein Korrosionsschutzprimer auf einer Zinkschicht verbessert daher nur die Flanschkorrosion. Eine Verbesserung der Lackunterwanderung und bei der Kantenkorrosion kann nicht beobachtet werden.

Aufgabe der Erfindung ist es, eine Korrosionsschutzschicht mit verbesserten Eigenschaften zu schaffen, die beim Durchlauf durch eine übliche Lackierstraße mit einem üblichen Lackierverfahren, bei dem sich an eine Phosphatierung der Lackaufbau anschließt, eine gute Lackhaftung ergibt, zudem gegenüber Zinkschichten oder Zink-Chrom-Schichten die Kantenkorrosion verbessert und einer Lackunterwanderung entgegen wirkt. Zudem soll eine aus Umweltgesichtspunkten verbesserte Schicht erzielt werden.

Die Aufgabe wird mit einer Korrosionsschutzschicht mit den Merkmalen des Anspruchs 1 gelöst.

Vorteilhafte Weiterbildungen sind in Unteransprüchen gekennzeichnet.

Es ist eine weitere Aufgabe ein Verfahren zum Herstellen einer Korrosionsschutzschicht mit verbesserter Lackhaftung zu schaffen.

Die Aufgabe wird mit einem Verfahren mit den Merkmalen des Anspruchs 17 gelöst.

Vorteilhafte Weiterbildungen sind in den hiervon abhängigen Ansprüchen gekennzeichnet.

Erfindungsgemäß wird eine Zink-Chrom-Schicht elektrolytisch auf ein Stahlblech aufgebracht und anschließend eine dünne chromatfreie organische Schicht aufgebracht. Eine Vorbehandlung und insbesondere Chromatierung der Schicht, d. h. der Einsatz von Chrom-VI-Ionen wird nicht durchgeführt.

Im Ergebnis wird eine Korrosionsschutzschicht mit einer hervorragenden Lackhaftung und sehr guten mechanischen Eigenschaften, insbesondere bezüglich der Umformung erzielt.

Die Zink-Chrom-Schicht wird hierbei insbesondere dünner ausgebildet als eigentlich für die Korrosionsbeständigkeit notwendig wäre. Die Zink-Chrom-Schicht kann in Verbindung mit dem Korrosionsschutzprimer so dünn ausgebildet sein, dass keine Abriebprobleme entstehen und trotzdem genügend Korrosionsschutz gewährleistet ist.

Ebenso wird die organische Schicht, die insbesondere aus einem üblichen Korrosionsschutzprimer besteht, dünner ausgebildet, als es zur Erzielung der üblichen korrosionshemmenden Wirkung des Korrosionsschutzprimers auf einer Zink-Schicht notwendig wäre. Erfindungsgemäß ist die organische Schicht chromatfrei.

Die Überwindung des Vorurteils der Aufbringung des - auf Zink-Chrom-Schichten eigentlich überflüssigen - Korrosionsschutzprimers einerseits und zudem die Verwendung von Schichten, die eigentlich dünner sind als es für eine Wirksamkeit notwendig erscheint andererseits, ergeben überraschende synergistische Effekte.

So ist beispielsweise die Resistenz gegen Steinschlag und insbesondere die Lackhaftung bei einer üblichen Zinkschicht bekannt, wobei die Resistenz gegen Steinschlag und die Lackhaftung bei einer Zink-Chrom-Schicht gegenüber einer Zink-Schicht schlechter sind.

Auch die Umformbarkeit und der Abrieb, die bei einer normalen Zink-Schicht einer gegebenen Größe entsprechen, sind bei einer entsprechenden Zink-Chrom-Schicht üblicherweise schlechter.

Im Stand der Technik wird durch die Aufbringung eines Korrosionsschutzprimers auf eine Zinkschicht deren Resistenz gegen Steinschlag und deren Lackhaftungsvermögen nicht verbessert, sondern bleibt im Wesentlichen gleich. Die Umformbarkeit einer solchen Schicht verbessert sich gegenüber der reinen Zink-Schicht durch geänderte tribologische Eigenschaften.

Überraschend ist jedoch, dass die Resistenz gegen Steinschlag und die Lackhaftung bei einem erfindungsgemäßen Schichtaufbau aus einer dünnen Zink-Chrom-Schicht und einer organischen Schicht auf Kunstharzbasis und insbesondere einem Korrosionsschutzprimer ganz erheblich besser ist, als die Steinschlagresistenz und die Lackhaftung einer reinen Zink-Schicht oder einer Zink-Schicht zuzüglich Korrosionsschutzprimer.

Während die Umformbarkeit einer reinen Zink-Chrom-Schicht schlecht ist, ist die Umformbarkeit der erfindungsgemäßen organisch beschichteten Zink-Chrom-Schicht zumindest so gut, wie die einer Zink-Schicht + Korrosionsschutzprimer.

Ein synergistischer Effekt ergibt sich jedoch nicht nur bei den tribologischen Kennwerten, die oben dargelegt sind, sondern auch bei den chemischen Kennwerten, insbesondere bei der Korrosion im Flanschbereich, an Kanten und bei Ritzen.

Ausgehend von einer üblichen Zink-Schicht erbringt eine Zink-Chrom-Schicht wie bereits in der Einleitung ausgeführt, Verbesserungen bezüglich der Korrosionsbeständigkeit der drei genannten Korrosionsformen (Flansch, Kante, Ritz), weshalb im Stand der Technik auf Zink-Chrom-Schichten auch keine organischen Beschichtungen aufgetragen wurden. Versieht man eine Zink-Schicht mit einem Korrosionsschutzprimer ergibt sich zwar eine etwas verbesserte Flanschkorrosion, jedoch bleibt die Korrosionsbeständigkeit an der Kante und im Ritzbereich gegenüber einer reinen Zinkschicht gleich. Dies liegt daran, dass die Vorteile des Korrosionsschutzprimers nur in den Bereichen spürbar sind, in denen beim nachfolgenden Lackieren kein Lack hinein gelangt. Dies ist der Flanschbereich.

Überraschenderweise konnte festgestellt werden, dass bei der Kombination einer Zink-Chrom-Schicht, die insbesondere dünn ausgebildet ist, und einem Korrosionsschutzprimer die Korrosionsbeständigkeit gegenüber der reinen Zink-Chrom-Schicht erheblich ansteigt und gegenüber einer reinen Zink-Schicht oder einer Zink-Schicht mit Korrosionsschutzprimer in einer derart erheblichen Weise ansteigt, dass dies auf die bloße Kombination der guten Eigenschaften der Zink-Chrom-Schicht einerseits und des Korrosionsschutzprimers andererseits nicht zurückzuführen ist.

Die Zink-Chrom-Schicht kann eine Dicke von 1 bis 10 µm besitzen, vorzugsweise 2,0 bis 6 µm wobei der Chromgehalt 1 bis 25 %, vorzugsweise 3 bis 10 %, beträgt. Der auf der Zink-Chrom-Schicht aufgebrachte organische dünne Film beispielsweise nach Art eines Korrosionsschutzprimers oder unter Verwendung eines an sich üblichen Korrosionsschutzprimers besitzt Dicken von 0,5 bis 10 µm, insbesondere 1 bis 8 µm, beispielsweise 2 bis 6 µm. Aber selbst bei einer Schichtdicke von nur 0,5 µm werden die sich bei der Erfindung einstellenden synergistischen Effekte erzielt.

Insofern sind Schichtdicken von 4-6 µm möglich. Mit einer derartigen Korrosionsschutzschicht mit einer Dicke von 4-6 µm alleine wird eine Verbesserung der Korrosionsschutzbeständigkeit und der tribologischen Eigenschaften erzielt gegenüber einer Zink-Schicht, die 7 bzw. 7,5 µm Dick ist. Selbst eine Zink-schicht von 7,5 µm, die eine übliche Korrosionsschutzprimerbeschichtung von weiteren 2 bis 6 µm besitzt, vermag an die herausragenden Eigenschaften der erfindungsgemäßen Korrosionsschutzschicht nicht heranzureichen.

Bei der Beschichtung üblicher Zink-Schichten mit einem Korrosionsschutzprimer wird eine Vorbehandlung mit speziellen Chemikalien, üblicherweise Chromaten, durchgeführt und anschließend der Korrosionsschutzprimer aufgebracht. Ohne diese chemische Vorbehandlung sind der Korrosionsschutz und die Lackhaftung mangelhaft. Überraschenderweise kann eine derartige chemische Vorbehandlung, insbesondere Chromatierung, oder chromfreie Vorbehandlung, insbesondere Phosphatierung, bei Zink-Chrom-Schichten entfallen.

Die Erfindung wird anhand einer Zeichnung mit mehreren Figuren sowie verschiedenen Beispielen erläutert, es zeigen dabei:

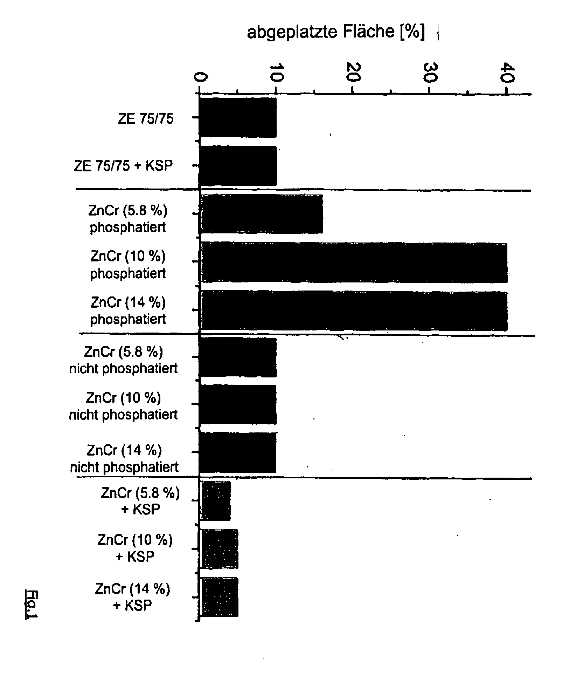

- Figur 1:: ein Balkendiagramm zeigend die Steinschlagbeständig- keit verschiedener Schichtsysteme;
- Figur 2:: eine Tabelle zeigend die Zusammensetzung von 17 Ver- gleichsbeispielen;
- Figur 3:: einen groben Aufbau für Proben zur Vornahme der Un- tersuchungen;
- Figur 4:: ein Verfahrensablauf für einen Wechselklimatest;
- Figur 5:: eine Tabelle zeigend acht Vergleichsproben im Abrieb- versuch;
- Figur 6:: ein Balkendiagramm zeigend den Abrieb gemäß der Ta- belle von Figur 5;
- Figur 7:: eine Tabelle zeigend die abgeblitzte Fläche bei Steinschlagversuchen bei acht verschiedenen Ver- gleichsbeispielen;
- Figur 8:: ein Balkendiagramm zur Gegenüberstellung der Ergeb- nisse der Tabelle von Figur 7;
- Figur 9:: eine Tabelle zeigend die Ergebnisse bei einem Versuch zeigend die Korrosionsunterwanderung am Ritz;
- Figur 10:: ein Balkendiagramm zeigend die Ergebnisse der Tabelle nach Figur 9;
- Figur 11:: eine Tabelle zeigend die Ergebnisse bei einem Flanschkorrosionsversuch;
- Figur 12:: ein Balkendiagramm zeigend die Ergebnisse nach Figur 10;
- Figur 13:: eine Tabelle zeigend die Unterwanderung an der Kante bei weiteren Versuchsbeispielen;
- Figur 14:: ein Balkendiagramm zeigend die Ergebnisse der Tabelle nach Figur 13;

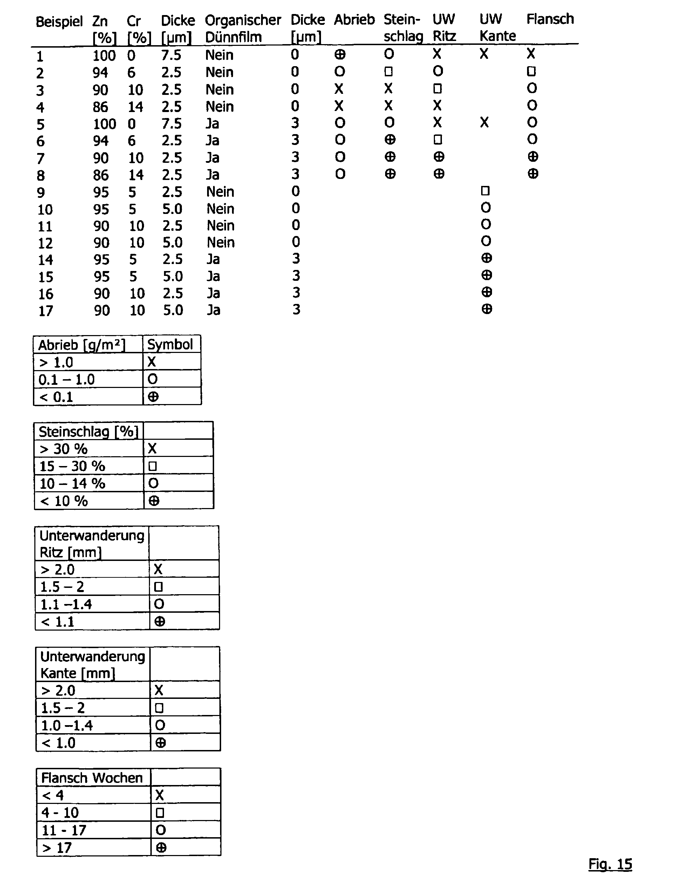

- Figur 15:: eine Zusammenfassung der Ergebnisse in tabellarischer Form;

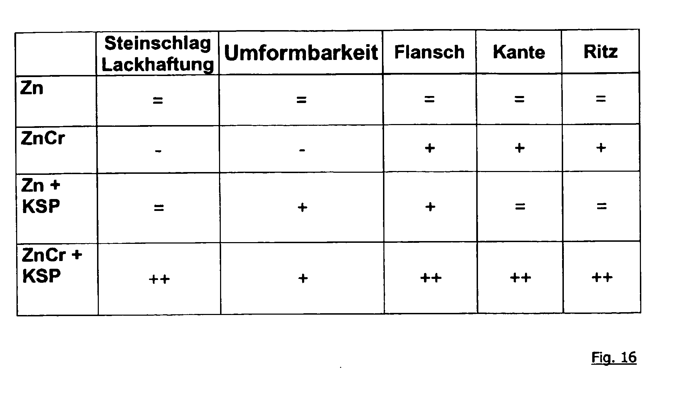

- Figur 16:: eine Zusammenfassung der Ergebnisse in Tabellenform.

Die Vergleichsproben wurden wie folgt hergestellt:

### I. Abscheidung der Zn-Cr-Schicht

Die Proben werden auf einer Laborbeschichtungszelle mit ein stellbarer Strömungsgeschwindigkeit beschichtet. Es werden Tafeln aus Weichstahl (Dicke 0,8 mm) und einer Größe von 150x100 mm beschichtet. Zur Herstellung des Elektrolyts werden folgende Chemikalien verwendet:
Zinksulfat-Heptahydrat: ZnSO₄x7H₂O
Kaliumchromsulfat-Dodekahydrat: KCr(SO₄)₂x12H₂O
Schwefelsäure: H₂SO₄(98%).

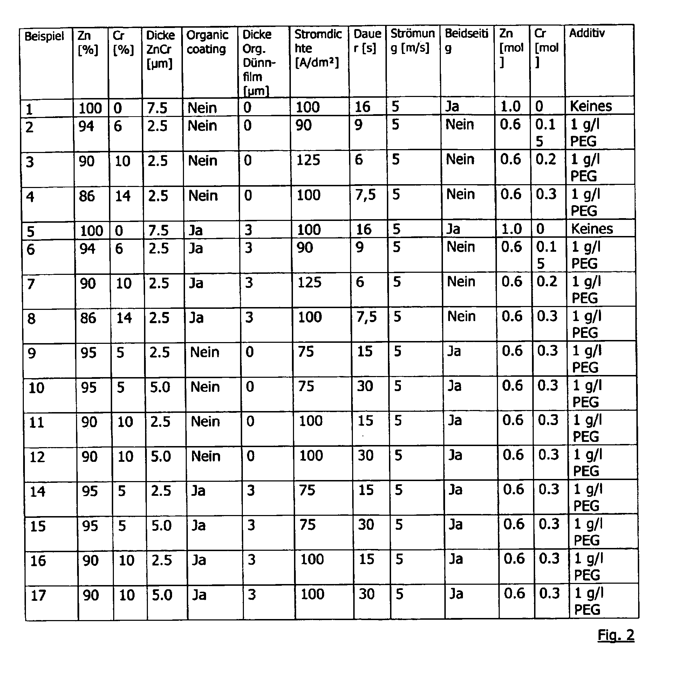

Die genauen Konzentrationen zur Abscheidung der Beispielproben sind in Figur 2 angegeben. Der pH-Wert des Elektrolyts beträgt 2, abgeschieden wird bei einer Temperatur von 40°C.

Die Auftragung des organischen Dünnfilms erfolgt mit einer Rakel, danach wird die Schicht für 30 Sek. bei einer Objekttemperatur von 250°C im Ofen ausgehärtet.

Bei der Abscheidung wurde als Additiv Polyethylenglykol 6000 (PEG) zugesetzt. Der organische Dünnfilm (Korrosionsschutzprimer, KSP) bestand aus dem Handelsprodukt "Granocoat ZE" der Firma Henkel KGaA wobei eine Vorbehandlung der Oberfläche mit dem Handelsprodukt "Granodine 1456" ebenfalls der Firma Henkel KGaA erfolgte. Letztere Vorbehandlung ist keine Vorbehandlung im Sinne einer Chromatierung oder Phosphatierung, da keine Kristalle abgeschieden werden, es handelt sich um eine amorphe Konversionsschicht.

Diese Vorbehandlung kann erfindungsgemäß auch entfallen.

### II. Allgemeine Beschreibung organischer Dünnfilmbeschichtungen

Die organischen Dünnfilmbeschichtungen werden großtechnisch inline an einer Bandbeschichtungsanlage auf verzinkten Stahl aufgebracht. Sie zeichnen sich durch Schweißbarkeit, Umformbarkeit und korrosionsschützende Wirkung aus.

Derartige Dünnfilmbeschichtungen enthalten vorzugsweise mindestens 5 Gew.-% elektrisch leitfähiger Partikel (z. B. Zn, Fe, FeP oder ähnliches). Die Beschichtungen sind lackartig und können auf Harzbasis (Polyurethan, Epoxyd und ähnliches) formuliert sein. Weitere übliche Bestandteile sind Polyester, Guanidinderivate, Harnstoffe, Melaminharze, Amine (zyklische und aromatische) und Alkohole (Ethylenglykol, Propylenglykol, Butandiol und Hexandiol). Erfindungsgemäß wurden nur chromatfreie Dünnfilmbeschichtungen eingesetzt.

Vor dem Aufbringen des organischen Dünnfilms werden die Bleche mit einer Lösung behandelt, die eine Konversionsschicht auf der Oberfläche zur besseren Haftung des Dünnfilms erzeugt. Diese Systeme basieren üblicherweise auf Hexafluorotitanaten, Zirkonaten, Phosphaten und Mangansalzen. Diese Korrosionsschicht wird im sogenannten no-Rinse-Prozess aufgebracht. Dabei wird die Behandlungslösung auf die Oberfläche aufgetragen, abgequetscht und getrocknet. Im Gegensatz zu einer Phosphatierung bilden sich keine Phosphatkristalle, sondern dünne amorphe Schichten aus Phosphaten.

### III. Behandlung der Versuchsproben (Vorbehandlung vor KSP)

Die Behandlung erfolgte durch Tauchen in der entsprechenden Lösung, anschließendes Abquetschen der Proben und Trocknung bei 70°C für 5 Sek. zur Ausbildung der amorphen Korrosionsschicht, bevor der organische Dünnfilm wie bereits beschrieben aufgebracht wurde.

### IV. Lackierung

Für die Untersuchungen bezüglich der Steinschlagbeständigkeit, der Unterwanderung an Ritz/Kante und der Flanschkorrosion werden die Proben nach einer für die Automobilfertigung typischen Weise behandelt:

### a) Reinigung:

Zunächst erfolgt eine Reinigung in einem mildalkalischen Reiniger (pH 11). Die Reinigung wird hierbei mit einem Handelsprodukt "Ridoline 1556" der Firma Henkel KGaA für 5 Min. bei 55°C durchgeführt. Anschließend werden die Proben gespült.

### b) Aktivierung:

Zur Erzeugung der Konversionsschicht bzw. Aktivierung werden die Proben in einer kolloidalen Lösung (5 g/l) aus Natriumtitanylphosphat unter dem Handelsnamen "Fixodine 50 CF" der Firma Henkel KGaA aktiviert.

### c) Phosphatierung:

Anschließend werden die Proben in einer nitratbeschleunigten Trikationphosphatierung phosphatiert, wobei die Behandlung 4 Min. bei 50°C erfolgt (Produktname: Granodine 958).

### d) Lackierung:

Schließlich werden die Proben mit einem Elektrotauchlack "Enviroprime" von PPG bis zu einer Dicke von 25 µm lackiert.

### V. Durchführung der Versuche

### V.1 Abrieb

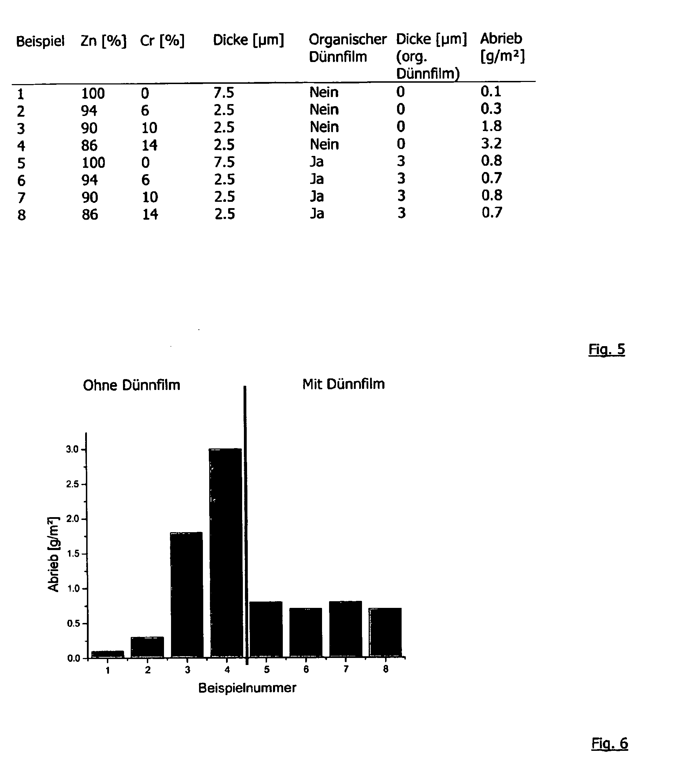

Aus kreisförmigen, unlackierten Proben mit einem Durchmesser von 66 mm wird ein Näpfchen gezogen. Das Ziehverhältnis beträgt 2, d. h. es resultieren Näpfchen mit 33 mm Durchmesser wobei die Ziehgeschwindigkeit bei 100 mm/Sek. liegt. Der Gewichtsunterschied vor und nach dem Tiefziehprozess wird auf die Schichtauflage an der Mantelfläche des Näpfchens bezogen und als prozentualer Abrieb angegeben. Dieser Versuch stellt den Abrieb beim Umformen nach und ist in Fig. 5 + 6 dargestellt.

### V.2 Korrosionstests

### V.2.1 Flanschbau

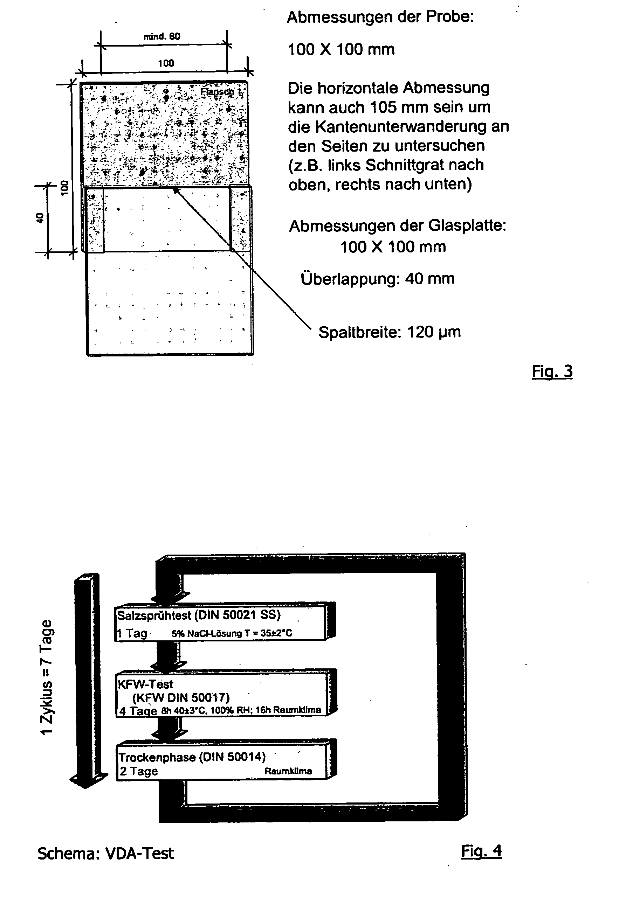

Zur Simulation der Korrosion in einem Flanschbereich werden 10x10 cm Proben zur Hälfte mit einer gleich großen Glasplatte abgeklebt. Der Abstand zwischen Probe und Glasplatte beträgt 120 µm. Die Abmessung der Probe ist in Figur 3 zu sehen, wobei die horizontale Abmessung auch 105 mm sein kann, um die Kantenunterwanderung an den Seiten zu untersuchen (z. B. in Figur 3 links Grat nach oben bzw. rechts nach unten).

### V.2.2 Wechselklimatest

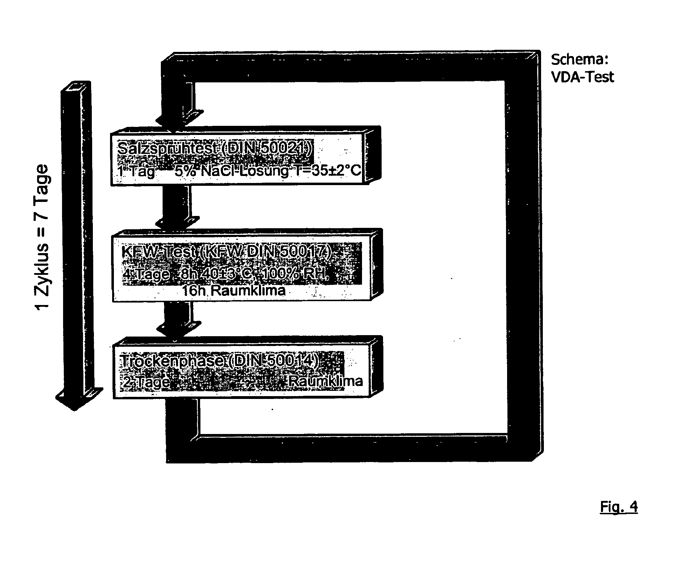

Die Proben werden für 10 Wochen einem Wechselklimatest nach VDA 621-415 unterzogen, so dass insbesondere 10 Zyklen durchlaufen werden (je Zyklus 7 Tage) wobei dieser Wechselklimatest eine Kombination aus einem Salzsprühtest nach DIN 50021 SS, einem KFW-Test nach DIN 50017 und einer Trockenphase nach DIN 50014 darstellt. Der Ablauf ist in Figur 4 dargestellt.

### V.2.3 Steinschlag

Die lackierten Proben, die entsprechend IV. hergestellt wurden, werden vor und nach der Auslagerung im Korrosionstest mit Steinschrot entsprechend der DIN 55996-1 beschossen. Die abgeplatzte Lackfläche wird bildanalytisch bestimmt.

### V.2.4 Unterwanderung am Ritz

Die lackierten Proben werden vor Auslagerung im Korrosionstest bis zum Grundmaterialstahl durchgeritzt. Nach dem Korrosionstest wird der unterwanderte Lack entfernt und die Breite des unterwanderten Ritzes gemessen.

### V.2.5 Unterwanderung an der Kante

Nach dem Korrosionstest wird der unterwanderte Lack von der Probenkante her entfernt und die Breite des unterwanderten Bereichs von der Kante bis zum intakten Lack bestimmt.

### V.2.6 Flanschkorrosion

Die zusammengebauten Glasflansche gelangen in den Korrosionstest und werden wöchentlich geprüft. Bestimmt wird die Dauer in Wochen bis zum Auftauchen erster Stahlkorrosionsprodukte (Rotrost) unter der Glasplatte.

### VI. Ergebnisse

Im Abriebversuch (Figuren 5, 6) wurden acht verschiedene Proben gegenübergestellt. Die Proben 1 und 5 sind mit 7,5 µm elektrolytisch verzinkte Stahlproben, die keinerlei Chrom enthalten, wobei Probe 1 keine organische Beschichtung umfasst und Probe 5 eine organische Beschichtung von 3 µm umfasst. Man kann erkennen, dass der Abrieb der organisch beschichteten Probe 8x höher liegt als der der reinen verzinkten Stahlprobe. Dem gegenüber wurden die Proben 2 und 6 mit einem Verhältnis von Zink zu Chrom 94:6, die Proben 3 und 7 mit einem Verhältnis Zink zu Chrom 90:10 und die Proben 4 und 8 mit einem Verhältnis Zink zu Chrom 86:14 hergestellt. Die Dicke der Zink-Chromschichten betrug hierbei jeweils 2,5 µm, wobei auf die Proben 2, 3 und 4 keine organische Beschichtung aufgebracht wurde und auf die Proben 6, 7 und 8 eine organische Beschichtung mit einer Dicke von 3 µm. Wenn hierbei von organischen Beschichtungen die Rede ist, sind hiermit insbesondere Korrosionsschutzprimer gemeint. Während bei den Proben 2, 3 und 4 mit zunehmenden Chromgehalt erwartungsgemäß der Abrieb stark ansteigt, bleibt der Abrieb bei steigendem Chromgehalt und einer organischen Beschichtung von 3 µm praktisch gleich.

Während sich somit beim Aufbringen einer organischen Beschichtung auf einer herkömmlichen Zink-Schicht (Probe 5) der Abrieb (dramatisch) erhöht, verhält sich das Abriebverhalten bei einer Zink-Chrom-Schicht - offensichtlich unabhängig vom Chromgehalt - in völlig überraschender Weise genau entgegengesetzt, d. h. die Abriebverluste sinken dramatisch ab. Ein solches Verhalten war in keiner Weise zu erwarten, da der Abrieb bei Zink-Chrom-Beschichtungen, die nicht über eine organische Beschichtung verfügen - was bislang bekannt ist -, mit steigendem Chromgehalt stark ansteigt und zudem - was auch bekannt ist - der Abrieb bei reinen elektrolytischen Zink-Schichten, die mit einem Korrosionsschutzprimer behandelt wurden ebenfalls stark ansteigen. Der Abrieb wird nunmehr durch den Abrieb der organischen Schicht bestimmt und ist unabhängig vom Abrieb der Zink-Chrom-Schicht.

Die Erfindung führt somit bezüglich des Abriebs zu einem Ergebnis, welches fachmännischen Überlegungen zuwider läuft.

### VI.2 Steinschlag

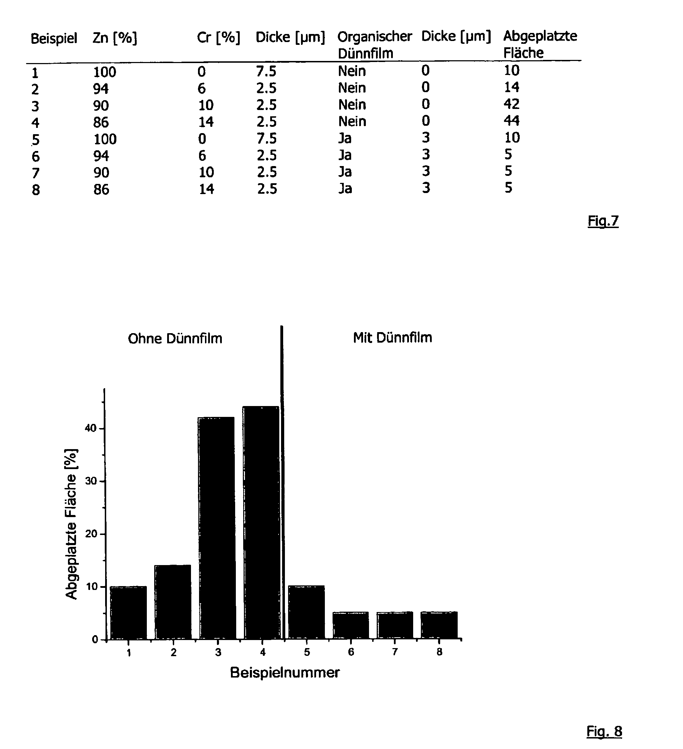

Es wurden wiederum acht Proben verwendet, die bezüglich ihres Aufbaus den acht Proben aus V.1 entsprachen (siehe Fig. 7). Im Steinschlagversuch zeigen die Proben 1 und 5, die über eine reine Verzinkung verfügen, unabhängig von der Tatsache, ob eine organische Beschichtung (KSP) vorliegt (Probe 5) oder nicht (Probe 1), ein gleiches Abplatzverhalten. Die Proben 2, 3 und 4, die Zink-Chrom-Schichten mit steigendem Chromgehalt sind, zeigen ein bekanntes Steinschlagverhalten von Zink-Chrom-Schichten, denn mit steigendem Chromgehalt steigt eigentlich die Sprödigkeit. Es wurde erwartungsgemäß festgestellt, dass mit steigendem Chromgehalt die abgeplatzte Fläche ansteigt. Bei einem Zink-Chromverhältnis von 86:14 ist die abgeplatzte Fläche mehr als 4x so groß als bei einer rein elektrolytischen Zink-Schicht.

Während eine KSP-Beschichtung bezüglich des Steinschlagverhaltens bei einer rein elektrolytischen Zink-Schicht keinen Unterschied erbringt, bringt die KSP-Beschichtung bei Zink-Chrom-Schichten unabhängig vom Chromgehalt völlig überraschend eine Verminderung der abgeplatzten Fläche, wobei die abgeplatzte Fläche nur halb so groß ist wie bei einer rein elektrolytischen Zink-Schicht von 7,5 µm. Der überraschende Effekt, den die organische Schicht auf eine Zink-Chrom-Beschichtung hat, wird besonders bei einem Zink-Chrom-Verhältnis von 86:14 und der organischen Beschichtung deutlich.

Gegenüber einer nichtorganisch beschichteten Zink-Chrom-Schicht gleicher Zusammensetzung ist die abgeplatzte Fläche gerade mal 1/8 so groß.

Auch dieser starke Effekt ist aufgrund des Verhaltens von elektrolytischen Zink-Schichten mit einem auf diesen ja üblicherweise angewandten Korrosionsschutzprimern nicht zu erwarten. Zink-Chrom-Schichten ohne Korrosionsschutzprimer, die eine Phosphatierung durchlaufen, zeigen schlechtere Lackhaftung im Steinschlagtest.

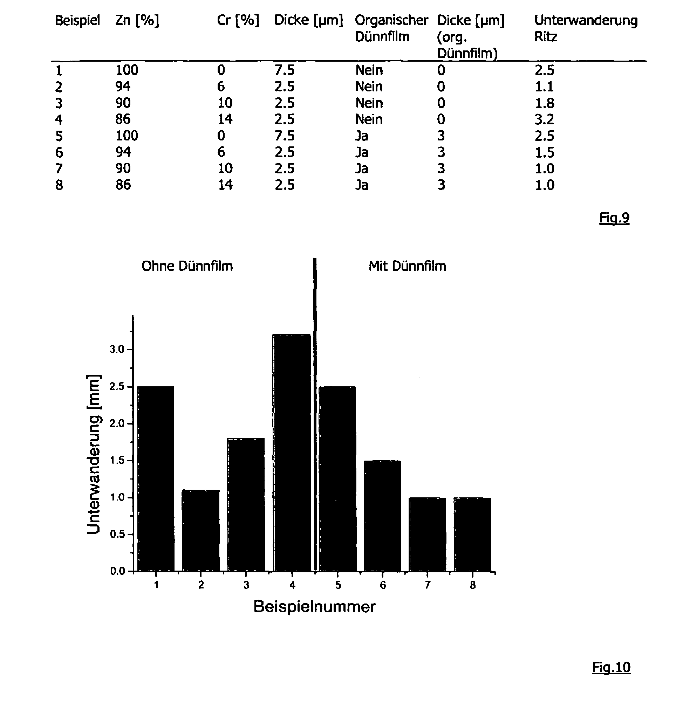

### VI.3 Unterwanderung am Ritz (siehe Fig. 9 + 10)

Die Proben 1 und 5 der insgesamt acht Proben sind wiederum rein elektrolytisch aufgebrachte Zink-Schichten von 7,5 µm Dicke. Einmal mit einer organischen Beschichtung (Probe 5) und einmal ohne (Probe 1). Die organische Beschichtung zeigt hier keinerlei Einfluss auf die Unterwanderung am Ritz, was, für die bei elektrolytisch aufgebrachten Zink-Schichten ja üblicherweise verwendeten Korrosionsschutzprimer, eine bekannte Tatsache ist.

Bei den drei Proben, die Zink-Chrom-Beschichtungen mit steigenden Chromgehalten und einer Schichtdicke von 2,5 µm aufweisen, kann mit steigendem Chromgehalt eine signifikante Zunahme der Unterwanderung beobachtet werden. Zwar liegt bei zwei Proben die Unterwanderung insgesamt noch niedriger als bei der insgesamt 3x dickeren reinen Zinkschicht, was die bemerkenswerte Korrosionsschutzwirkung der relativ dünnen Zink-Chrom-Schicht zeigt. Die dritte Probe mit einem Chromgehalt von 14 % liegt jedoch auch bezüglich der Unterwanderung am Ritz etwas schlechter als eine reine Zink-Schicht.

Überraschenderweise zeigt auch bei der Unterwanderung am Ritz die organische Beschichtung im Zusammenspiel mit der Zink-Chrom-Schicht ein überraschender Weise völlig entgegengesetztes Verhalten. Mit steigendem Chromgehalt und mit der organischen Beschichtung mit einer Dicke von 3 µm verbessert sich sogar das Verhalten bezüglich der Unterwanderung am Ritz mit steigendem Chromgehalt bzw. bleibt bei hohen Chromgehalten gleich. Dies steht völlig im Widerspruch zu den Erwartungen des Fachmanns, so dass hier insbesondere bei hohen Chromgehalten offensichtlich ein synergistischer Effekt zwischen der relativ dünnen Zink-Chrom-Schicht und der organischen Beschichtung zu beobachten ist.

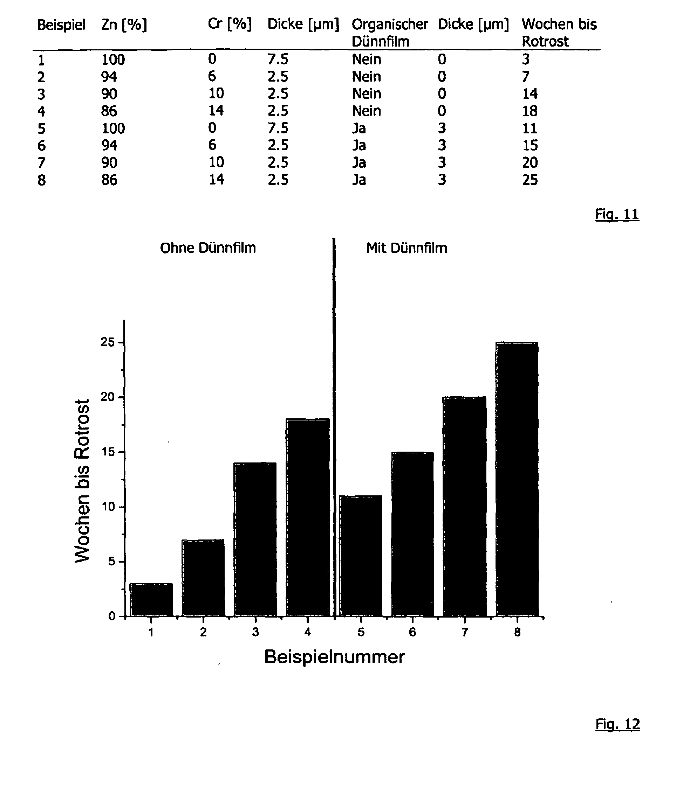

### VI.4 Korrosion (bis Rotrost) am Flansch (siehe Fig. 11 und 12)

Auch für den Flanschkorrosionsversuch wurden wiederum acht Proben verwendet, wobei die Proben 1 und 5 reine elektrolytische Verzinkungen auf Stahlblech mit einer Dicke von 7,5 µm waren, einmal mit organischer Beschichtung (5) und einmal ohne (1). Bei der Flanschkorrosion wurde die bekannte Tatsache deutlich, dass die Flanschkorrosion mit einem Korrosionsschutzprimer wirksam herabgesetzt werden kann. Dies ist im Stand der Technik auch der Grund für den Einsatz des Korrosionsschutzprimers bei reinen Zink-Schichten.

Der Versuch macht aber auch deutlich, warum bislang Korrosionsschutzprimerschichten bzw. organische Beschichtungen bei Zink-Chrom-Beschichtungen nicht angewendet oder angedacht wurden. Bereits bei einem üblichen Zink-Chrom-Verhältnis von 90:10 ist die Zink-Chrom-Schicht der reinen Zink-Schicht mit Korrosionsschutzprimer soweit überlegen, dass aus Gründen der Verbesserung der Flanschkorrosion der Korrosionsschutzprimer bei einer Zink-Chrom-Schicht nicht angewendet werden müsste.

Es zeigt sich an den Proben 6, 7 und 8 jedoch, dass der Korrosionsschutzprimer auch bei Zink-Chrom-Schichten die Korrosionsschutzwirkung verbessert. Hierbei sind Zink-Chrom-Schichten mit einer Korrosionsschutzprimerschicht herkömmlichen Zink-Schichten offensichtlich weit überlegen (Figuren 11, 12), und das bei erheblich kleineren Dicken.

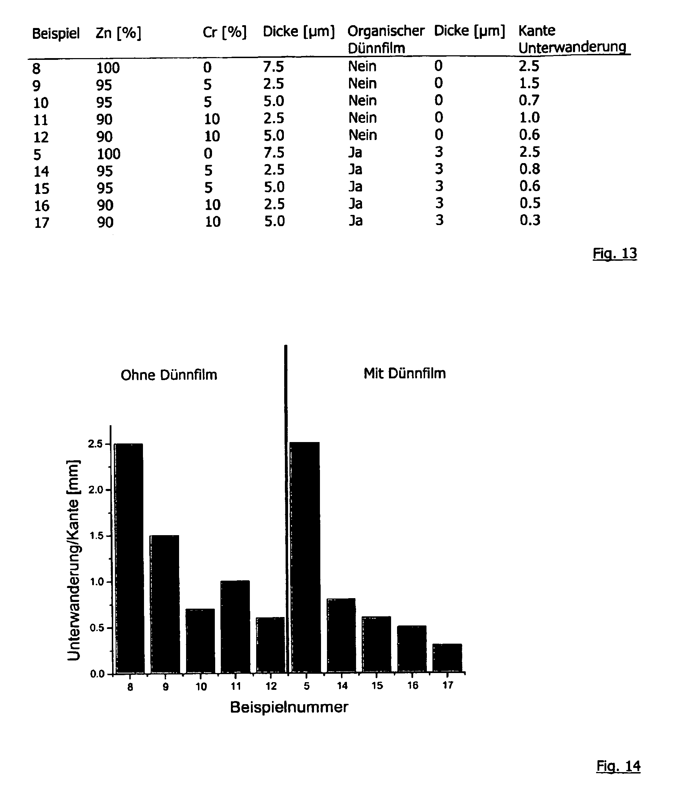

### VI.5 Unterwanderung an der Kante (siehe Fig. 13, 14)

Für die Untersuchung der Korrosionsunterwanderung an der Kante wurden zwei Proben mit einer elektrolytischen Zink-Schicht und einer Beschichtungsdicke von 7,5 µm gegenübergestellt, wobei eine Probe (5) mit einer organischen Beschichtung von 3 µm und eine Probe ohne organische Beschichtung (8) untersucht wurden. Diesen Proben wurden vier Proben mit Zink-Chrom-Schichten gegenübergestellt, wobei das Zink-Chrom-Verhältnis einmal 95:5 und einmal 90:10 betrug und bei jedem dieser Verhältnisse die Schichtdicke einmal 2,5 µm und einmal 5 µm betrug. Diese Proben wurden jeweils mit einer organischen Beschichtung (Proben 14 bis 17) und ohne organische Beschichtung (Proben 9 bis 12) eingesetzt.

Zunächst kann festgestellt werden, dass der Korrosionsschutzprimer bei reinen Zink-Schichten keinerlei Einfluss auf das Unterwanderungsverhalten besitzt. Die Unterwanderung mit organischer Beschichtung entsprach exakt der ohne organische Beschichtung. Dem gegenüber war eine Zink-Chrom-Schicht mit einem Gehalt von 5 % Chrom bei einer Schichtdicke von 2,5 µm, also 1/3 der Dicke der Zink-Schicht, der Zink-Schicht bezüglich des Unterwanderungsverhaltens bereits deutlich überlegen. Bei einer Schichtdicke von 5 µm konnte das Unterwanderungsverhalten praktisch linear doppelt verbessert werden.

Bei einem Chromgehalt von 10 % wurde das Unterwanderungsverhalten bei einer Schichtdicke von 2,5 µm gegenüber der etwas dünneren Schicht weiter verbessert, bei einer Schichtdicke von 5 µm ist die Zink-Chrom-Schicht mit 5 % Chrom der Zink-Chrom-Schicht mit 10 % praktisch ebenbürtig.

Im Gegensatz zu diesen Verhaltensweisen von Zink-Chrom-Schichten in Abhängigkeit von der Dicke einerseits bzw. dem Chromgehalt andererseits, werden bei eben diesen Verhältnissen jedoch unter Auftrag einer organischen Beschichtung (wie z. B. KSP) wiederum Effekt erzielt, die so nicht zu erwarten waren.

Bei einer Schicht mit 5 % Chromanteil wird durch die organische Beschichtung das Unterwanderungsverhalten an der Kante deutlich verbessert, so dass der Unterwanderungsfortschritt fast halbiert werden kann. Bei der größeren Schichtdicke, jedoch einem Chromanteil von 5 % kann eine Verbesserung durch den Korrosionsschutzprimer bzw. die organische Beschichtung nicht erzielt werden. Eigenartiger Weise kann jedoch bei dem höheren Chromgehalt von 10 % und der organischen Beschichtung eine weitere Verbesserung erzielt werden, so dass gegenüber einer nicht beschichteten Zink-Chrom-Schicht mit einem Chromgehalt von 10 % durch die organische Beschichtung bzw. den Korrosionsschutzprimer die Unterwanderung an der Kante nochmals halbiert werden kann.

Es kann daher vermutet werden, dass insbesondere zwischen dem Chromgehalt einer Zink-Chrom-Schicht und der Verwendung organischer Beschichtungen bzw. Korrosionsschutzprimern ein zuvor noch nicht beobachteter synergistischer Effekt vorliegt. Worauf dieser synergistische Effekt genau beruht, konnte bislang noch nicht sicher festgestellt werden.

Bei der Beschichtung üblicher Zink-Schichten mit einem Korrosionsschutzprimer wird eine Vorbehandlung mit speziellen Chemikalien durchgeführt und anschließend der Korrosionsschutzprimer aufgebracht. Ohne diese chemische Vorbehandlung sind der Korrosionsschutz und die Lackhaftung mangelhaft. Überraschenderweise kann eine derartige chemische Vorbehandlung bei Zink-Chrom-Schichten entfallen.

### VII Zusammenfassung

Zusammenfassend kann anhand der Versuche festgestellt werden, dass zwischen einer Zink-Chrom-Beschichtung einerseits und einer hierauf aufgebrachten organischen Beschichtung auf Kunstharzbasis, insbesondere eine Korrosionsschutzprimerbeschichtung andererseits, offensichtlich eine Wechselwirkung besteht, die über eine additive Wirkung beider Systeme deutlich hinausgeht.

Dies wird insbesondere deutlich bei der Unterwanderung an der Kante, bei der insbesondere bei hohen Chromgehalten der Wechselwirkungseffekt zwischen Korrosionsschutzprimer und Zink-Chrom-Beschichtung besonders deutlich wird.

Dies wird jedoch auch bei den Abriebversuchen deutlich, bei denen sich der Abrieb bei dem bekannten System elektrolytische Zink-Schicht + Korrosionsschutzprimer erhöht, sich der Abrieb bei bekannten Zink-Chrom-Beschichtungen mit dem Chromgehalt erhöht (was ebenfalls bekannt war) der Abrieb bei einer Zink-Chrom-Beschichtung und einem Korrosionsschutzprimer jedoch absenkt. Aus dem Stand der Technik und den bisherigen Untersuchungen war ein solches Verhalten nicht bekannt und auch in keinster Weise zu erwarten.

Bei der Erfindung ist von Vorteil, dass ein Korrosionsschutzsystem in Form einer Korrosionsschutzschicht geschaffen wird, welches einer reinen elektrolytischen Zink-Schicht, einer elektrolytischen oder feuerverzinkten Zink-Schicht zuzüglich Korrosionsschutzprimer und einer Zink-Chrom-Schicht in jedem wichtigen Parameter weit überlegen ist und vor allem eine hervorragende Lackhaftung ergibt.

Hinzu kommt, dass diese Schicht eine Gesamtdicke besitzt, die deutlich geringer, insbesondere nur halb so groß ist, wie die einer bekannten elektrolytischen Zinkschicht und nur ¼ so dick wie eine feuerverzinkte Schicht, jeweils mit Korrosionsschutzprimer, ist.

Die erfindungsgemäße Korrosionsschutzschicht lässt sich durch die geringere Schichtdicke schneller auftragen und erlaubt, aufgrund ihrer erheblich höheren Resistenz gegen mechanische und chemische Belastungen höhere Ziehtiefen und Ziehgeschwindigkeiten und somit auch die Herstellung komplexer Bauteile ohne Einbuße des Korrosionsschutzes.

Erfindungsgemäß wirken zwei Korrosionsschutzsysteme zusammen, die zuvor aufgrund von Vorurteilen der Fachwelt nicht miteinander kombiniert wurden, wobei die bekannten Nachteile einer reinen Zink-Chrom-Schicht erst gar nicht zu ihrem Einsatz in großtechnischer Weise geführt haben. Bei der Kombination der beiden Korrosionsschutzsysteme Zink-Chrom-Schicht einerseits und Korrosionsschutzprimer bzw. organische Beschichtung anderseits ergeben sich zudem Effekte, die sich in einer reinen Verbesserung des Korrosionsschutzes - der an sich ggf. zu erwarten gewesen wäre - nicht erschöpfen. Vielmehr werden auch die mechanischen Eigenschaften derart stark verbessert, dass dies aus vorangegangenen Versuchen anderer Korrosionsschutzschichten mit organischen Beschichtungen in keiner Weise zu erwarten war.

## Patentansprüche

1. Korrosionsschutzschicht zum Schutz von Stahlsubstraten vor Korrosion, aufweisend eine auf dem Stahlsubstrat sich befindende, durch elektrolytische gemeinsame Abscheidung von Zink- und Chromionen aufgebrachte Zink-Chrom-Schicht und eine darauf aufgebrachte chromatfreie organische Dünnschicht, aufweisend im Wesentlichen Kunstharze.

2. Korrosionsschutzschicht nach Anspruch 1, **dadurch gekennzeichnet, dass** die Zink-Chrom-Schicht 1 bis 25 % Chrom enthält, Rest überwiegend Zink und ggf. Begleitelemente sowie übliche Verunreinigungen.

3. Korrosionsschutzschicht nach Anspruch 1 oder 2, **dadurch gekennzeichnet, dass** der Chromgehalt 3 bis 10 %, Rest Zink und ggf. Begleitelemente und übliche Verunreinigungen beträgt.

4. Korrosionsschutzschicht nach einem der vorhergehenden Ansprüche, **dadurch gekennzeichnet, dass** die Zink-Chrom-Schicht eine Dicke von 1 bis 10 µm besitzt.

5. Korrosionsschutzschicht nach einem der vorhergehenden Ansprüche, **dadurch gekennzeichnet, dass** die Dicke der Zink-Chrom-Schicht 2 bis 6 µm beträgt.

6. Korrosionsschutzschicht nach einem der vorhergehenden Ansprüche, **dadurch gekennzeichnet, dass** die Dicke der Zink-Chrom-Schicht 2,5-5 µm beträgt.

7. Korrosionsschutzschicht nach einem der vorhergehenden Ansprüche, **dadurch gekennzeichnet, dass** die Dicke der Zink-Chrom-Schicht vom Chromgehalt der Schicht abhängt, wobei bei niedrigem Chromgehalt die Schicht eine Dicke von 5 bis 10 µm besitzt und bei hohen Chromgehalten eine Dicke von 1 bis 5 µm besitzt.

8. Korrosionsschutzschicht nach einem der vorhergehenden Ansprüche, **dadurch gekennzeichnet, dass** die organische Schicht elektrisch leitfähige Partikel enthält, wobei die Schicht lackartig auf Kunstharzbasis ausgebildet ist.

9. Korrosionsschutzschicht nach einem der vorhergehenden Ansprüche, **dadurch gekennzeichnet, dass** die organische Schicht als elektrisch leitfähige Partikel Metallpartikel enthält.

10. Korrosionsschutzschicht nach einem der vorhergehenden Ansprüche, **dadurch gekennzeichnet, dass** die organische Schicht auf Kunstharzbasis Polyurethan und/oder Epoxydharz und/oder Phenolharz und/oder Melaminharz enthält.

11. Korrosionsschutzschicht nach einem der vorhergehenden Ansprüche, **dadurch gekennzeichnet, dass** die organische Schicht zudem Polyester und/oder Guanidinderivate und/oder Harnstoffe und/oder zyklische und/oder aromatische Amine und/oder Alkohole umfasst.

12. Korrosionsschutzschicht nach einem der vorhergehenden Ansprüche, **dadurch gekennzeichnet, dass** die organische Schicht eine Dünnfilmbeschichtung ist.

13. Korrosionsschutzschicht nach einem der vorhergehenden Ansprüche, **dadurch gekennzeichnet, dass** die organische Schicht aus einem üblichen Korrosionsschutzprimer ausgebildet ist.

14. Korrosionsschutzschicht nach einem der vorhergehenden Ansprüche, **dadurch gekennzeichnet, dass** die Dicke des organischen Dünnfilms auf der Zink-Chrom-Schicht 0,5 bis 10 µm beträgt.

15. Korrosionsschutzschicht nach einem der vorhergehenden Ansprüche, **dadurch gekennzeichnet, dass** die Dicke des organischen Dünnfilms 1,5 bis 6 µm beträgt.

16. Korrosionsschutzschicht nach einem der vorhergehenden Ansprüche, **dadurch gekennzeichnet, dass** die Dicke des organischen Dünnfilms 3 µm beträgt.

17. Verfahren zum Herstellen einer Korrosionsschutzschicht mit einer verbesserten Lackhaftung auf Basis einer Zink-Chrom-Korrosionsschutzschicht auf Stahlsubstraten, **dadurch gekennzeichnet, dass** auf die elektrolytisch abgeschiedene Zink-Chrom-Schicht ein organischer chromatfreier Dünnfilm, umfassend Kunstharze, aufgebracht wird.

18. Verfahren nach Anspruch 17, **dadurch gekennzeichnet, dass** die Abscheidung der Zink-Chrom-Schicht aus einem saueren Sulfatelektrolyt mit zweiwertigem Zink und dreiwertigem Chrom erfolgt.

19. Verfahren nach einem der Ansprüche 17 oder 18, **dadurch gekennzeichnet, dass** für die Mitabscheidung von Chrom in die Schicht Polyethylenglykol als Zusatz verwendet wird.

20. Verfahren nach einem der Ansprüche 17 bis 19, **dadurch gekennzeichnet, dass** der organische Dünnfilm ohne Vorbehandlung auf die elektrolytisch abgeschiedene Zink-Chrom-Schicht aufgebracht wird.

21. Verfahren nach einem der Ansprüche 17 bis 19, **dadurch gekennzeichnet, dass** vor dem Aufbringen des organischen Dünnfilms eine chemische Konversionsbehandlung zur Verbesserung der Haftung durchgeführt wird, wobei eine Lösung enthaltend Phosphate und/oder Fluortitanate und/oder Fluorzirkonate neben einem organischen Polymer wie einem Silan im no-rinse-Verfahren aufgebracht wird, so dass eine amorphe Schicht ausgebildet wird.

22. Verfahren nach einem der Ansprüche 17 oder 21, **dadurch gekennzeichnet, dass** die Dünnfilmbeschichtung im Coil-Coating-Verfahren aufgebracht wird.

23. Verfahren nach einem der Ansprüche 17 bis 22, **dadurch gekennzeichnet, dass** die Dünnfilmbeschichtung mit einer Dicke von 0,5 bis 10 µm aufgebracht wird.

24. Verfahren nach einem der Ansprüche 17 bis 23, **dadurch gekennzeichnet, dass** eine organische Schicht verwendet wird, die elektrisch leitfähige Partikel enthält, wobei die Kunstharzbasis Polyurethan und/oder Epoxydharz und/oder Phenolharz und/oder Melaminharz umfasst.

25. Verfahren nach einem der Ansprüche 17 bis 24, **dadurch gekennzeichnet, dass** als organische Dünnfilmbeschichtung ein handelsüblicher Korrosionsschutzprimer für die Beschichtung von elektrolytisch verzinkten oder feuerverzinkten Stahlsubstraten verwendet wird.

26. Verwendung chromatfreier organischer Dünnschichten im wesentlichen enthaltend Kunstharze auf Zink-Chrom-Schichten auf Stahlsubstraten.

27. Verwendung von chromatfreien Korrosionsschutzprimern auf Zink-Chrom-Schichten auf Stahlsubstraten.

## Claims

1. Corrosion-protective layer for protecting steel substrates from corrosion, comprising a zinc-chromium layer located on the steel substrate applied by electrolytic joint deposition of zinc and chromium ions, and a chromate-free organic thin layer applied thereon, substantially comprising synthetic resins.

2. Corrosion-protective layer according to claim 1, **characterised in that** the zinc-chromium layer comprises 1 to 25% chromium, the remainder being, for the most part, zinc and possibly accompanying elements as well as common impurities.

3. Corrosion-protective layer according to claim 1 or 2, **characterised in that** the chromium content is 3 to 10%, the remainder being zinc and possibly accompanying elements as well as common impurities.

4. Corrosion-protective layer according to one of the preceding claims, **characterised in that** the zinc-chromium layer has a thickness of 1 to 10 µm.

5. Corrosion-protective layer according to one of the preceding claims, **characterised in that** the thickness of the zinc-chromium layer is 2 to 6µm.

6. Corrosion-protective layer according to one of the preceding claims, **characterised in that** the thickness of the zinc-chromium layer is 2.5 to 5 µm.

7. Corrosion-protective layer according to one of the preceding claims, **characterised in that** the thickness of the zinc-chromium layer depends on the chromium content of the layer, the layer having a thickness of 5 to 10 µm where the chromium content is low, and a thickness of 1 to 5 µm where the chromium content is high.

8. Corrosion-protective layer according to one of the preceding claims, **characterised in that** the organic layer comprises electrically conductive particles, wherein the layer is formed to be paint-like on a synthetic-resin basis.

9. Corrosion-protective layer according to one of the preceding claims, **characterised in that** the organic layer comprises metal particles as electrically conductive particles.

10. Corrosion-protective layer according to one of the preceding claims, **characterised in that** the synthetic resin-based organic layer comprises polyurethane and/or epoxy resin and/or phenolic resin and/or melamine resin.

11. Corrosion-protective layer according to one of the preceding claims, **characterised in that** the organic layer additionally comprises polyester and/or guanidine derivatives and/or ureas and/or cyclic and/or aromatic amines and/or alcohols.

12. Corrosion-protective layer according to one of the preceding claims, **characterised in that** the organic layer is a thin-film coating.

13. Corrosion-protective layer according to one of the preceding claims, **characterised in that** the organic layer is formed from a conventional corrosion-protective primer.

14. Corrosion-protective layer according to one of the preceding claims, **characterised in that** the thickness of the organic thin film on the zinc-chromium layer is 0.5 to 10 µm.

15. Corrosion-protective layer according to one of the preceding claims, **characterised in that** the thickness of the organic thin film is 1.5 to 6 µm.

16. Corrosion-protective layer according to one of the preceding claims, **characterised in that** the thickness of the organic thin film is 3 µm.

17. Method for producing a corrosion-protective layer having an improved paint-adhesion based on a zinc-chromium corrosion-protective layer on steel substrates, **characterised in that** an organic chromate-free thin film comprising synthetic resins is applied onto the electrolytically deposited zinc-chromium layer.

18. Method according to claim 17, **characterised in that** the deposition of the zinc-chromium layer is carried out from an acid sulfate electrolyte with divalent zinc and trivalent chromium.

19. Method according to one of the claims 17 or 18, **characterised in that** polyethylene glycol is used as an additive for the co-deposition of chromium into the layer.

20. Method according to one of the claims 17 to 19, **characterised in that** the organic thin film is applied onto the electrolytically deposited zinc-chromium layer without pre-treatment.

21. Method according to one of the claims 17 to 19, **characterised in that** chemical conversion treatment for improving adhesion is carried out prior to applying the organic thin film, wherein a solution comprising phosphates and/or fluorotitantes and/or fluorozirconates is applied besides an organic polymer, such as a silane, using the no-rinse process, so that an amorphous layer is formed.

22. Method according to one of the claims 17 or 21, **characterised in that** the thin-film coating is applied using the coil coating method.

23. Method according to one of the claims 17 to 22, **characterised in that** the thin-film coating is applied in a thickness of 0.5 to 10 µm.

24. Method according to one of the claims 17 to 23, **characterised in that** an organic layer comprising electrically conductive particles is used, the synthetic resin basis comprising polyurethane and/or epoxy resin and/or phenolic resin and/or melamine resin.

25. Method according to one of the claims 17 to 24, **characterised in that** a commercially available corrosion-protective primer for coating electrolytically galvanised or hot-dip galvanised steel substrates is used as the organic thin-film coating.

26. Use of chromate-free organic thin films substantially comprising synthetic resins on zinc-chromium layers on steel substrates.

27. Use of chromate-free corrosion-protective primers on zinc-chromium layers on steel substrates.

## Revendications

1. Couche de protection anticorrosion pour protéger des substrats en acier vis-à-vis de la corrosion, comprenant une couche zinc-chrome qui se trouve sur le substrat en acier et qui est appliquée par déposition commune électrolytique d'ions zinc et d'ions chrome, et une couche mince organique appliquée sur celle-ci et dépourvue de chromate, comprenant essentiellement des résines synthétiques.

2. Couche de protection anticorrosion selon la revendication 1, **caractérisée en ce que** la couche zinc-chrome contient de 1 à 25 % de chrome, le reste étant principalement du zinc et le cas échéant des éléments d'accompagnement ainsi que les impuretés habituelles.

3. Couche de protection anticorrosion selon la revendication 1 ou 2, **caractérisée en ce que** la teneur en chrome est de 3 à 10 %, le reste étant du zinc et le cas échéant des éléments d'accompagnement et les impuretés habituelles.

4. Couche de protection anticorrosion selon l'une des revendications précédentes, **caractérisée en ce que** la couche zinc-chrome possède une épaisseur de 1 à 10 µm.

5. Couche de protection anticorrosion selon l'une des revendications précédentes, **caractérisée en ce que** l'épaisseur de la couche zinc-chrome est de 2 à 6 µm.

6. Couche de protection anticorrosion selon l'une des revendications précédentes, **caractérisée en ce que** l'épaisseur de la couche zinc-chrome est de 2,5 à 5 µm.

7. Couche de protection anticorrosion selon l'une des revendications précédentes, **caractérisée en ce que** l'épaisseur de la couche zinc-chrome dépend de la teneur en chrome de la couche, et lorsque la teneur en chrome est faible la couche possède une épaisseur de 5 à 10 µm alors que pour des teneurs en chrome élevées elle possède une épaisseur de 1 à 5 µm.

8. Couche de protection anticorrosion selon l'une des revendications précédentes, **caractérisée en ce que** la couche organique contient des particules électriquement conductrices, ladite couche étant réalisée à la manière d'une laque à base de résine synthétique.

9. Couche de protection anticorrosion selon l'une des revendications précédentes, **caractérisée en ce que** la couche organique contient des particules de métal à titre de particules électriquement conductrices.

10. Couche de protection anticorrosion selon l'une des revendications précédentes, **caractérisée en ce que** la couche organique à base de résine synthétique contient du polyuréthane et/ou une résine époxy et/ou une résine phénolique et/ou une résine à mélamine.

11. Couche de protection anticorrosion selon l'une des revendications précédentes, **caractérisée en ce que** la couche organique comprend en outre du polyester et/ou des dérivés de guanidine et/ou des urées et/ou des amines cycliques et/ou aromatiques et/ou des alcools.

12. Couche de protection anticorrosion selon l'une des revendications précédentes, **caractérisée en ce que** la couche organique est un revêtement en film mince.

13. Couche de protection anticorrosion selon l'une des revendications précédentes, **caractérisée en ce que** la couche organique est réalisée d'un apprêt de protection anticorrosion habituel.

14. Couche de protection anticorrosion selon l'une des revendications précédentes, **caractérisée en ce que** l'épaisseur du film mince organique sur la couche zinc-chrome est de 0,5 à 10 µm.

15. Couche de protection anticorrosion selon l'une des revendications précédentes, **caractérisée en ce que** l'épaisseur du film mince organique est de 1,5 à 6 µm.

16. Couche de protection anticorrosion selon l'une des revendications précédentes, **caractérisée en ce que** l'épaisseur du film mince organique est de 3 µm.

17. Procédé pour la production d'une couche anticorrosion présentant une meilleure adhérence, à la base d'une couche anticorrosion zinc-chrome sur des substrats en acier, **caractérisé en ce que** l'on applique, sur la couche zinc-chrome déposée par voie électrolytique, un film mince organique dépourvu de chromate, comprenant des résines synthétiques.

18. Procédé selon la revendication 17, **caractérisé en ce que** la déposition de la couche zinc-chrome a lieu à partir d'un électrolyte sulfate acide avec du zinc bivalent et du chrome trivalent.

19. Procédé selon l'une des revendications 17 ou 18, **caractérisé en ce que** pour la déposition conjointe de chrome dans la couche on utilise du polyéthylène glycol à titre d'additif.

20. Procédé selon l'une des revendications 17 à 19, **caractérisé en ce que** le film mince organique est appliqué sans traitement préalable sur la couche zinc-chrome déposée par voie électrolytique.

21. Procédé selon l'une des revendications 17 à 19, **caractérisé en ce qu'**avant l'application du film mince organique on exécute un traitement de conversion chimique pour améliorer l'adhérence, dans lequel une solution contenant des phosphates et/ou du titanate de fluor et/ou du zirconate de fluor est appliquée en plus d'un polymère organique, comme un silane, dans un processus sans rinçage, de sorte que l'on forme une couche amorphe.

22. Procédé selon l'une des revendications 17 aux 21, **caractérisé en ce que** le revêtement en film mince est appliqué dans un processus dit "Coil Coating" (revêtement à la bobine).

23. Procédé selon l'une des revendications 17 à 22, **caractérisé en ce que** le revêtement en film mince est appliqué avec une épaisseur de 0,5 à 10 µm.

24. Procédé selon l'une des revendications 17 à 23, **caractérisé en ce que** l'on utilise une couche organique qui contient des particules électriquement conductrices, dans lequel la base en résine artificielle comprend du polyuréthane et/ou une résine époxy et/ou une résine phénolique et/ou une résine à mélamine.

25. Procédé selon l'une des revendications 17 à 24, **caractérisé en ce que** l'on utilise à titre de revêtement organique en film mince un apprêt de protection anticorrosion habituel du commerce pour le revêtement de substrats en acier galvanisés par voie électrolytique ou galvanisés à chaud.

26. Utilisation de couches minces organiques dépourvues de chromate contenant essentiellement des résines synthétiques sur des couches zinc-chrome sur des substrats en acier.

27. Utilisation d'apprêts de protection anticorrosion dépourvus de chromate sur des couches zinc-chrome sur des substrats en acier.
